# EUROPEAN PATENT APPLICATION

(11) **EP 4 310 590 A1**
(43) Date of publication of application: **24.01.2024**
(21) Application number: 23186620.3
(22) Date of filing: 20.07.2023
(51) Int. Cl.: G03B 21/56, G03B 21/58

(54) **A CONCAVE PROJECTION SCREEN**

(30) Priority: 22.07.2022 NL 2032582
(71) Applicant: Ultimmersion B.V., 6721RV Bennekom (NL)
(72) Inventor: Rikken, Jeremy, 6721 RV Bennekom (NL)
(74) Representative: de Jong, Maurits David

(57) **Abstract**

The invention relates to a projection screen comprising a projection surface arranged on a concave support frame, which support frame comprises a concave upper frame part and a concave lower frame part lying at a distance therefrom and which projection surface is concave in a first direction and is flat in a second direction lying at right angles to the first direction, wherein the projection surface is formed by a projection side of a flexible projection cloth, wherein the peripheral edge of the projection cloth comprises an upper edge and lower edge and which projection cloth extends in the second direction from the lower edge to the upper edge and comprises on a rear side lying opposite the projection side and close to and parallel to the upper and lower edge respectively an upper tendon and lower tendon which are arranged in a tendon profile of respectively the upper frame part and the lower frame part for the purpose of tensioning the projection cloth in the second direction.

## Description

The invention relates to a projection screen comprising a projection surface arranged on a concave support frame, which support frame comprises a concave upper frame part and a concave lower frame part lying at a distance therefrom, and which projection surface is concave in a first direction and is flat in a second direction lying at right angles to the first direction.

In order to create an immersive experience, simulation games such as racing simulators or flight simulators, among others, make use of a plurality of flat screens, so that a large viewing angle is obtained. Also known are concave projection screens which cover for instance a viewing angle of 180° or more.

A drawback of the existing projection screens is that the concave projection surface consists of one or more rigid or semi-rigid segments in order to prevent wrinkles from appearing in the concave projection surface. This makes the existing projection screens unsuitable for home use, because the projection screens cannot be set up and dismantled in simple manner. Additionally, they still take up a great deal of space in dismantled state.

It is therefore an object of the invention to reduce or even obviate the above stated drawback. It is also an object of the invention to provide a projection screen which can be set up and dismantled in simple manner.

This object is achieved according to the invention with a projection screen according to the preamble, characterized in that the projection surface is formed by a projection side of a flexible projection cloth, wherein the peripheral edge of the projection cloth comprises an upper edge and lower edge and which projection cloth extends in the second direction from the lower edge to the upper edge and comprises on a rear side lying opposite the projection side and close to and parallel to the upper and lower edge respectively an upper tendon and lower tendon which are arranged in a tendon profile of respectively the upper frame part and the lower frame part for the purpose of tensioning the projection cloth in the second direction.

By providing the projection screen with a flexible projection cloth the projection screen can be stored away compactly when it is not in use. In order to prevent the projection cloth from wrinkling, it is arranged in the tendon profiles of the support frame by means of the tendons for the purpose of tensioning the projection cloth in the second direction. The projection cloth is then tensioned flat in the second direction. The tendons are preferably flat tendons, so that they can be pressed into the tendon profiles in simple manner. The tendon profiles, these being slots for receiving a tendon of the projection cloth, of the upper and lower frame part are therefore directed toward the rear side of the projection cloth.

The relative terms upper and lower in respect of for instance the peripheral edge and/or the support frame are intended solely to indicate a relative position in relation to the projection cloth and/or support frame. Although they may correspond with a possible preferred position in use of the projection screen, the terms are thus not intended to be limitative for the position of use of the projection screen.

In another embodiment of a projection screen according to the invention the support frame also comprises a first and a second side frame part, which side frame parts comprise a tendon profile and extend at a distance from each other in the second direction between the upper frame part and lower frame part, and wherein the peripheral edge of the projection cloth also comprises a first and second side edge and wherein respectively a first and a second side tendon are arranged on the rear side of the projection cloth, close to and parallel to respectively the first and the second side edge, which side tendons are arranged in the respective tendon profiles of the side frame parts.

Arranging the projection cloth in the side frame parts of the support frame on the side edges as well also prevents the side edges of the projection cloth from curling up or folding because the projection cloth is tensioned between the upper frame part and lower frame part. Owing to the side tendons, the side edges can also remain taut when the side edges are not straight, whereby the tension in the second direction is unable to fully tension the side edges. The side tendons are preferably arranged 3-4 mm from the side edge so that the projection cloth is pulled sufficiently taut but does not cause so much tension in the first direction that a part of the concave upper or lower tendons are pulled out of the tendon profile.

The tendons are preferably contiguous, so that the projection cloth can be arranged in a tendon profile along the whole peripheral edge and thus lies tautly thereagainst all the way around.

In yet another embodiment of a projection screen according to the invention the projection cloth is wholly opaque.

With an opaque projection cloth it can be prevented that the support frame or for instance a light source on the rear side of the projection cloth is visible through the projection cloth.

Also according to the invention is an embodiment of a projection screen wherein the projection surface is rectangular.

A rectangular projection surface is highly suitable for projection by means of one or more beamers.

In a preferred embodiment of a projection screen according to the invention the projection cloth is rollable or foldable.

Making the projection cloth rollable and/or foldable enables the projection screen to be stored away compactly when it is not in use. The projection cloth is preferably rollable transversely of the first direction, preferably with the projection side facing inward. The projection side of the projection cloth is hereby pulled taut automatically when unrolling the tendons and arranging them in the tendon profiles.

Another embodiment of a projection screen according to the invention is a projection screen wherein the support frame is provided with support legs for disposing the projection screen on a ground surface.

By providing support legs the projection screen can be arranged on a ground surface in self-supporting manner. This increases the applicability of the projection screen in home situations, where no standard provisions are available for hanging the projection screen.

These and other features of the invention are further elucidated with reference to the accompanying drawings.
Figure 1 shows a perspective view of a first embodiment of a projection screen according to the invention.
Figure 2 shows a rear side of a projection cloth of a projection screen according to the invention.
Figure 3 shows a cross-sectional view along line III-III of the projection cloth according to figure 2.
Figure 4 shows a segment of a corner of a support frame of a projection screen according to the invention.

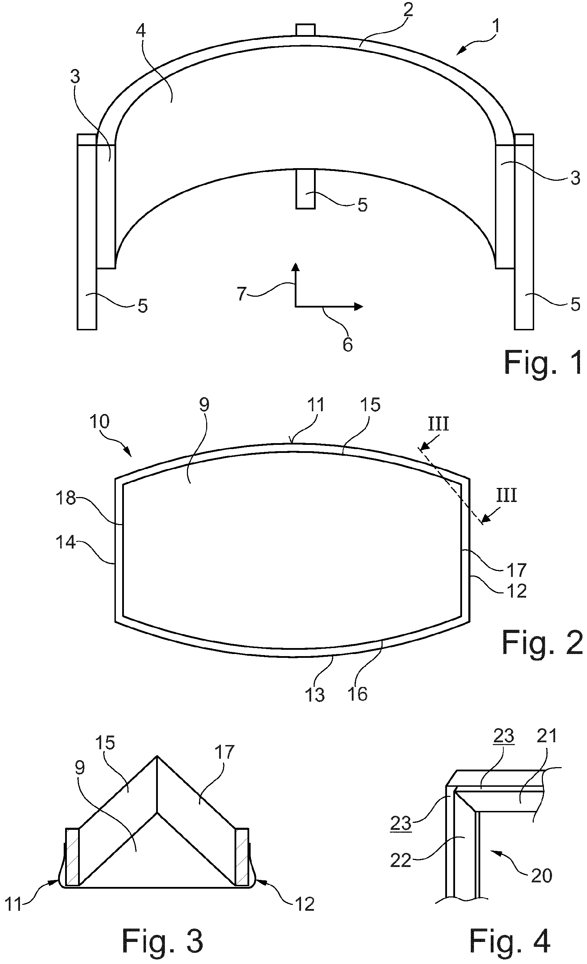

Figure 1 shows a perspective view of a first embodiment of a projection screen 1 according to the invention. The concave upper frame part 2 forms together with side frame parts 3 and the lower frame part (not visible) the support frame on which the projection cloth 4 is arranged. The support frame is also provided with support legs 5. The projection surface which is formed by the projection side of projection cloth 4 becomes concave in the first direction 6. In the second direction 7 the projection cloth is flat.

Figure 2 shows a rear side 9 of a projection cloth 10 of a projection screen according to the invention. The peripheral edge of projection cloth 10 consists of respectively an upper edge 11, a first side edge 12, a lower edge 13 and a second side edge 14. Upper edge 11 and lower edge 13 are not straight, causing the height, as measured parallel to a side edge 12, of the projection surface of a projection screen provided with the projection cloth 10 to be higher in the centre than at the side edges 12, 14. Arranged parallel to and at a distance from upper edge 11 and lower edge 13 are respectively the upper tendon 15 and lower tendon 16. The side tendons 17, 18 are optional, but are arranged contiguously with the upper tendon 15 and lower tendon 16 in the shown projection cloth 10.

Figure 3 shows a cross-sectional view along line III-III of the projection cloth 10 according to figure 2. Upper tendon 15 and first side tendon 17 connect to each other and are arranged at right angles to the rear side 9 of projection cloth 10. The edges 11, 12 of the projection cloth are folded round the tendons 15, 17 and attached thereto.

Figure 4 shows a segment 20 of a corner of a support frame of a projection screen according to the invention. An upper frame part 21 and a side frame part 22 converge in the corner. A tendon profile 23 is arranged in adjoining manner in the two frame parts 21, 22 for the purpose of receiving a tendon of a projection cloth.

## Claims

1. A projection screen comprising a projection surface arranged on a concave support frame, which support frame comprises a concave upper frame part and a concave lower frame part lying at a distance therefrom, and which projection surface is concave in a first direction and is flat in a second direction lying at right angles to the first direction, **characterized in that** the projection surface is formed by a projection side of a flexible projection cloth, wherein the peripheral edge of the projection cloth comprises an upper edge and lower edge and which projection cloth extends in the second direction from the lower edge to the upper edge and comprises on a rear side lying opposite the projection side and close to and parallel to the upper and lower edge respectively an upper tendon and lower tendon which are arranged in a tendon profile of respectively the upper frame part and the lower frame part for the purpose of tensioning the projection cloth in the second direction.

2. Projection screen according to claim 1, wherein the support frame also comprises a first and a second side frame part, which side frame parts comprise a tendon profile and extend at a distance from each other in the second direction between the upper frame part and lower frame part, and wherein the peripheral edge of the projection cloth also comprises a first and second side edge and wherein respectively a first and a second side tendon are arranged on the rear side of the projection cloth, close to and parallel to respectively the first and the second side edge, which side tendons are arranged in the respective tendon profiles of the side frame parts.

3. Projection screen according to claim 2, wherein the tendons are contiguous.

4. Projection screen according to any one of the foregoing claims, wherein the projection cloth is wholly opaque.

5. Projection screen according to any one of the foregoing claims, wherein the projection surface is rectangular.

6. Projection screen according to any one of the foregoing claims, wherein the projection cloth is rollable and/or foldable.

7. Projection screen according to any one of the foregoing claims, wherein the support frame is provided with support legs for disposing the projection screen on a ground surface.
